# EUROPEAN PATENT SPECIFICATION

(11) **EP 2 710 828 B1**
(45) Date of publication and mention of the grant of the patent: **15.02.2023**
(21) Application number: 11865941.6
(22) Date of filing: 16.05.2011
(51) Int. Cl.: H04W 16/14

(54) **METHOD AND ARRANGEMENT RELATED TO INTERFERENCE BETWEEN SYSTEMS**
VERFAHREN UND ANORDNUNG IM ZUSAMMENHANG MIT INTERFERENZ ZWISCHEN SYSTEMEN
PROCÉDÉ ET DISPOSITIF AYANT TRAIT AU BROUILLAGE ENTRE DES SYSTÈMES

(43) Date of publication of application: 26.03.2014
(73) Proprietor: Telefonaktiebolaget LM Ericsson (publ), 164 83 Stockholm (SE)
(72) Inventor: DIMOU, Konstantinos, S-113 41 Stockholm (SE); KARLSSON, Jörgen, S-174 36 Sundbyberg (SE); MAGNUSSON, Sverker, S-112 36 Stockholm (SE)
(74) Representative: Zacco Sweden AB
(86) International application number: PCT/SE2011/050612
(87) International publication number: WO 2012/158076

(56) References cited:
- EP-A2- 1 537 676
- EP-A2- 1 841 252
- WO-A1-03/001742
- WO-A1-03/001742
- WO-A1-2010/137777
- WO-A1-2011/066787
- WO-A2-2007/050921
- US-A1- 2007 147 226
- US-A1- 2008 075 059
- US-A1- 2011 069 630
- YIXIAN LIU ET AL.: 'Energy detection threshold optimization for cooperative spectrum sensing' ADVANCED COMPUTER CONTROL (ICACC), 2010 2ND INTERNATIONAL CONFERENCE ON vol. 4, 27 March 2010 - 29 March 2010, pages 566 - 570, XP031691002 Retrieved from the Internet: <URL:http://ieeexplore.ieee.org/stamp/stamp .jsp?tp=&arnumber=5486887&isnumber=5486611>

## Description

### TECHNICAL FIELD

The invention relates to a method and arrangement for handling of interference between systems using adjacent frequency bands.

### BACKGROUND

Modern communication systems, such as e.g. UMTS (Universal Mobile Telecommunications System), LTE (Long Term Evolution) and LTE-A (Advanced) cause a significantly higher amount of out-of-band interference into adjacent frequency bands than earlier "legacy" communication systems, such as e.g. GSM (Global System for Mobile communications). Such out-of-band interference is also sometimes referred to as "interference leakage". The main reason for this out-of-band interference is that modern systems typically employ larger, or wider, bandwidth(s) than legacy systems, and that it is more difficult to develop filters which can cut the out-of-band emissions for a relatively large bandwidth than for a relatively narrow bandwidth.

This significantly higher amount of out-of-band interference or emissions may result in violation of e.g. regulations concerning interference caused to other systems, which employ frequency bands adjacent to the frequency band(s) employed by the interference generating, or "disturbing" systems. Examples of systems using spectrum bands which are adjacent to, or are anticipated to be adjacent to, the frequency bands used by e.g. UMTS, LTE and LTE-A in some countries, and thus may be subjected to out-of-band interference from these systems, are e.g.:
- the radio navigation and communication systems between airplanes and the ground, such as DME (Distance Measuring Equipment) (962-1213 MHz) and future L-DACS (L-band Digital Aeronautical Communication System) (950-1450 MHz)
- the communication/control system used for communication with and control of trains GSM-R (Railway) (876-925 MHz in Europe)

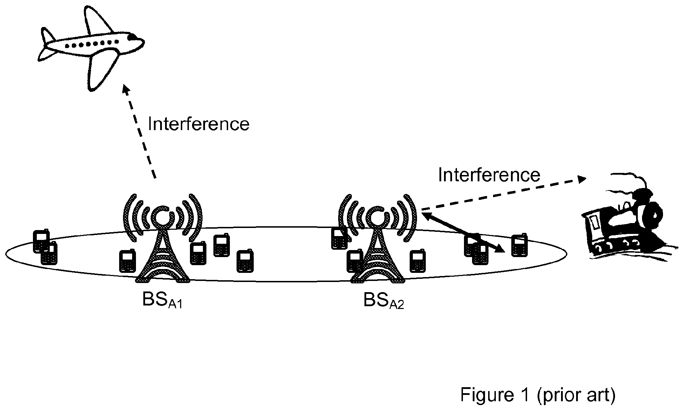

For example, in Europe, an LTE system may use the 900, 1800, and/or 2600 MHz bands. Thus, e.g. an LTE system DL (DownLink) transmission in the 900 MHz frequency band may cause interference to transmissions within the DME or L-DACS systems used for communication with, or control of, e.g. airplanes. Such a scenario is illustrated in figure 1. Thus, in a worst case scenario, the out-of-band interference from the LTE DL transmission may e.g. interrupt or disturb important airplane control commands.

A number of solutions have been proposed to mitigate interference between systems using adjacent frequency bands. Most of these proposed solutions focus on the use of a (static) low transmit power in the system causing out-of band interference, or on the use of fixed so-called "guard bands" between the adjacent frequency bands used by different systems or operators. By guard band is meant a frequency band which is not used for communication, but as a buffer for out-of-band interference caused by the systems employing the frequency bands surrounding the guard band. The wider frequency bands used by the systems, the wider guard bands are needed to avoid interference between the systems.

These proposed prior art solutions, however, may cause e.g. coverage problems when the (static) transmit power is too low, and, may further be inefficient e.g. in terms of radio resource usage, by the use of unnecessarily large guard bands based on a worst-case scenario. Further, bandwidth is a scarce resource that is very valuable to the respective authorities or organizations controlling the frequency spectrum in each country. Thus, at least for economical reasons, reserving wide guard bands between systems using adjacent frequency bands is not an attractive idea.

Another example can be found in patent documents US2008/075059, US2007/147226 and WO03/001742.

### SUMMARY

The invention is defined by the independent claims. Furthermore, embodiments of the invention are defined by the claims. Moreover, examples and descriptions, which are not covered by the claims are presented not as embodiments of the invention, but as background art or examples useful for understanding the invention. It would be desirable to obtain an improved handling of interference between systems using adjacent frequency bands. It is an object of the invention to enable an improved handling of interference between systems using adjacent frequency bands. It is further an object of the invention to provide an efficient method and arrangement for avoiding or reducing interference from a first system to a second system using an adjacent frequency band.

An advantage of the invention is that interference e.g. from mobile systems BSs (Base Stations/eNBs) and/or UEs (User Equipment) to adjacent system services is avoided or reduced by taking appropriate actions only when and where this is needed, without thus sacrificing bandwidth and/or transmission power more than necessary.

Dynamic information about the interference scenarios may be used, and unnecessary worst-case assumptions can be avoided and the constraints on the interfering system can be minimized. The dynamic modifications to the interfering system may be selected as the alternative method that will minimize e.g. the QoS degradation of the interfering system, according to some objective function

The above method and arrangement may be implemented in different embodiments. For example, the at least one adjusted parameter could be one or more of: the bandwidth in which the node operates; the antenna pattern of one or more transmit antennas associated with the node; the transmit power used by the node; the frequency characteristics of a filter in the node; the frequencies used for communication by the node and instructions to one or more mobile terminals served by the node. The instructions to the one or more mobile terminal may be related to e.g. transmit power, frequency usage for uplink communication, filter settings and/or bandwidth.

The at least one parameter may be adjusted such that interference to the second frequency band is reduced when it is determined that the interference does not fulfill a predefined criterion and thus potentially interferes with the second system activity; and, such that the interference to the second frequency band is maintained or increased when it is determined that the interference fulfills said predefined criterion.

The detecting of the activity in the second frequency band may involve performing measurements of activity in the second frequency band; receiving reports of measurements of activity in the second frequency band performed by another node in the first system; receiving explicit information of second system activity in the second frequency band from a node in the second system; receiving information on the geographical position of one or more mobile nodes in the second system; receiving information of the movement pattern of one or more nodes in the second system; receiving information on a time schedule of a node in the second system, and/or receiving information on receiver characteristics of one or more nodes in the second system.

The first system may be e.g. one of UMTS, LTE, LTE-A, and Worldwide Interoperability for Microwave Access (WiMAX).

. The second system may be one of Distance Measuring Equipment (DME); L-band Digital Aeronautical Communication System (L-DACS); Global System for Mobile Communications - Railway (GSM-R); a radar system; a system for broadcast; and a satellite based system.

According to a third aspect, a network node is provided for use in a cellular communication system, said network node comprising an arrangement according to the second aspect.

The embodiments above have mainly been described in terms of methods. However, the description above is also intended to embrace embodiments of the arrangements and network node/mobile terminal, adapted to enable the performance of the above described features.

### BRIEF DESCRIPTION OF THE DRAWINGS

The invention will now be described in more detail by means of exemplary embodiments and with reference to the accompanying drawings, in which:
Figure 1 illustrates a scenario where a cellular communication system may interfere with other systems, such as control systems for planes and trains, according to the prior art.
Figures 2a is a diagram showing an ideal system frequency spectrum (bold line), and an actual system frequency spectrum (thin line).
Figures 2b is a diagram showing examples of modified out-of-band interference (dashed and dash-dotted lines) as compared to the out of band interference shown in figure 2 (thin solid line), according to exemplifying embodiments.
Figure 3 is a diagram showing an ideal transmitter frequency spectrum (bold line) in a first system A, and an ideal receiver spectrum (dotted line) in a second system B.
Figures 4a-4c are diagrams illustrating inter system interference between a transmitter of a first system A and a receiver of a second system B, according to the prior art (figure 4a) and according to different exemplifying embodiments (figures 4b-4c).
Figures 5a-5c are diagrams illustrating inter system interference from a real transmitter of a first system A to an ideal receiver of a second system B, according to the prior art (figure 5a) and according to different exemplifying embodiments (figures 5b-5c).
Figures 6a-6c are diagrams illustrating inter system interference to an ideal transmitter of a first system A from a real receiver of a second system B, according to the prior art (figure 6a) and according to different exemplifying embodiments (figures 6b-6c).
Figures 7a-7b are schematic views illustrating BSs of a system and the extension of the coverage of different cells of the BSs in absence of (figure 7a) and in presence of (figure 7b) a train, according to an exemplifying embodiment.
Figure 8 is a schematic view illustrating, BSs of a system and the extension of the coverage of different cells of the BSs as a train is moving along a track, according to an exemplifying embodiment.
Figure 9 is a flow chart illustrating a procedure in a node in a communication system, according to an exemplifying embodiment.
Figure 10 is a block diagram illustrating an arrangement in a node in a communication system, according to an exemplifying embodiment.
Figure 11 is a block diagram illustrating an arrangement, according to an exemplifying embodiment.

### DETAILED DESCRIPTION

Briefly described, a solution is provided for avoiding interference between systems using adjacent frequency bands. The solution is dynamic, and thus enables e.g. improved utilization of bandwidth resources, as compared to prior art solutions. The provided solution involves dynamic adaptation of the amount of generated out-of-band interference, based on the actual activity in an adjacent frequency band. A system employing a method and arrangement according to an exemplifying embodiment may be described as keeping a "dynamic interference margin" to a system using an adjacent frequency band, and/or as creating a "temporary guard band" to the latter.

Within this document, the expression "a disturbing system" will be used as referring to a system generating out-of-band interference into an adjacent frequency band. Further, the expression "a disturbed system" will be used as referring to a system associated with a frequency band into which a disturbing system generates interference. A disturbed system does not need to be literally disturbed by interference generated by a disturbing system. Further, two "adjacent" frequency bands may or may not be separated by some further frequency band, and still be adjacent.

An easily comprehensible example of where the suggested solution may be employed is e.g. in a base station "BS_{A}" of a cellular communication system "A", where the base station "BS_{A}" is located in a geographical area in close vicinity of an airport or a railway line, as illustrated in figure 1, where the frequency band used by the cellular communication system "A" is adjacent to the frequency band(s) used by the airplane or train communication/control system. The activity in the airplane or train communication/control system will be closely related to the presence of airplanes landing or taking off, or of trains passing by. During periods, there will most probably be no plane or train activity, and thus no activity in these communication/control systems.

Typically there are requirements and rules for how much out-of-band interference a communication system may generate. However, theoretically, the base station "BS_{A}" could be allowed to cause "unlimited" out-of-band interference when there is no activity in the airplane or train communication/control system in the example above, since there is no activity which may be disturbed by such interference, and consequently no interference margin to the adjacent frequency band(s) is required. The out-of-band interference generated by "BS_{A}" could then be adapted based on the actual level of activity in the airplane or train communication/control system.

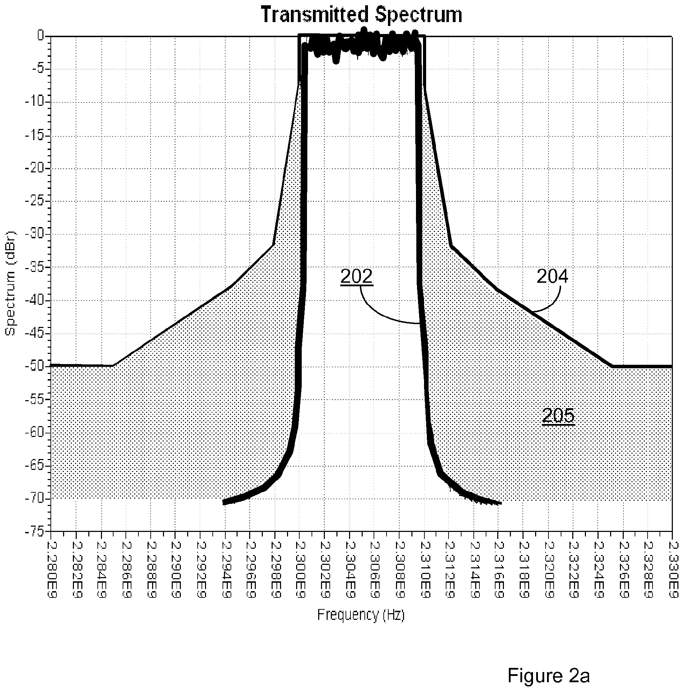

An example of a frequency band 202 associated with a system "A" is outlined in figure 2a with a bold solid line. The frequency band 202 may e.g. be reserved for the system "A", e.g. by that an operator of the system "A" has acquired a license for the frequency band 202 at an auction or similar. The actual frequency band 204, which is affected by communication within system "A" in said frequency band 202, is outlined with a thin solid line (204). The out-of-band interference is thus the shaded area 205 outside the frequency band 202, which comprises signal energy associated with the system "A".

Thus, when it is detected that an airplane or a train is approaching, a parameter or operating condition in the base station "BS_{A}" may be adjusted such that the communication of said approaching airplane or train will not be disturbed by out-of-band interference caused by base station "BS_{A}" communication. Information on the arrival of an airplane or a train can be obtained by the base station "BS_{A}" in a number of ways. For example, such information could be provided directly from the airplane/train control systems, or, the base station "BS_{A}" could be provided with functionality for obtaining information regarding approaching trains/airplanes either by measuring e.g. received signal strength, receiving reports of measurements performed by other nodes in system A, or, by decoding information from an airplane/train communication channel.

Based on knowledge of parameters, such as, e.g., the position of an airplane or train "B", the estimated distance from the airplane or train "B" to the base station "BS_{A}", the velocity and/or the typical behavior of "B", one or more transmission parameters of the base station may be adjusted during e.g. a given time period, or until the airplane or train "B" has "moved on" or been safely landed.

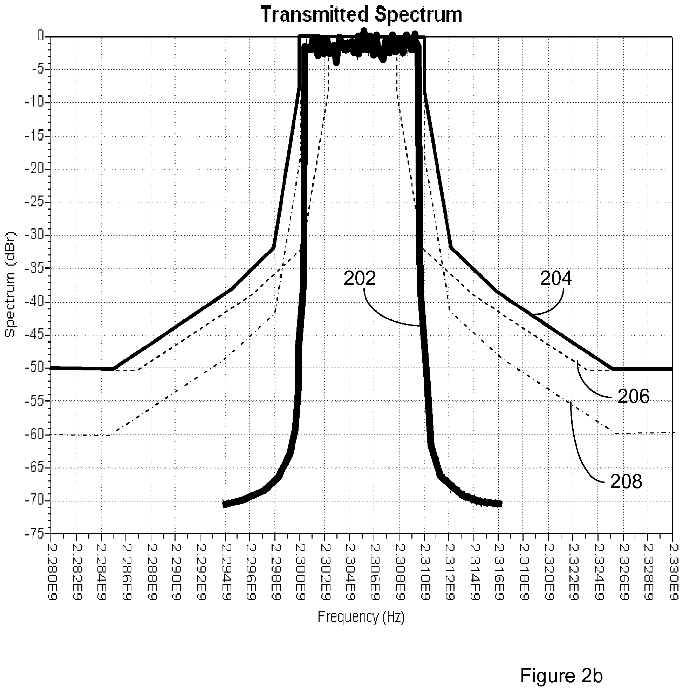

The base station "BS_{A}" could be provided with information on how the out-of-band performance of the base station "BS_{A}" depends on, or is affected by, the adjustment of different parameters related to radio communication. Having access to such information enables the base station "BS_{A}" to "optimize" the adjustment, i.e. to adjust a parameter or combination of parameters such that a sufficient reduction of the out-of-band interference is provided while maintaining the best possible performance of base station communication. A "sufficient reduction" could be e.g. a reduction which reduces the interference to a level which complies with predefined regulations. Some examples of how the out-of-band interference may be adapted or adjusted are illustrated in figure 2b and outlined with a dashed line 206 and a dash-dotted line 208, respectively. If starting with the out-of-band interference outlined by line 204 (205 in figure 2a), the out-of-band interference in accordance with the dashed outline 206 may be accomplished e.g. by changing the filter characteristics of an adaptive filter in a node in system "A". The out-of-band interference in accordance with the dash-dotted outline 208 may be accomplished by e.g. lowering the transmit power of a system node, and/or e.g. tilting the transmit antenna(s) associated with said node downwards.

Other examples of parameters which may be taken into consideration when deciding which parameter(s) to adjust and to which extent are e.g. the number of mobile terminals or UEs served by the base station in question, and further, the power requirements of said UEs resulting from e.g. the UEs' distance from the base station and/or the service(s) utilized by the UEs.

Further, signal characteristics of the interfered system, such as e.g. the interfered system bandwidth and/or frequency usage, may be considered when adapting the out-of-band interference by adjusting an operational condition or parameter in a node, such as e.g. BS_{A}, in the interfering cellular communication system "A". Taking the signal characteristics of the interfered system into consideration could affect the size or extension of the dynamic interference margin or temporary guard band. This and other aspects of the suggested solution will result in an efficient use of radio resources, due to that the dynamic interference margin to the possibly interfered system will be only as wide as necessary during current conditions.

Moreover, knowledge of the interfered system characteristics and temporary and geographical situation can be used so as to reduce the degradation of the mobile system (e.g. LTE). As an example, the interfered system at a given location can handle high interference from the mobile system within some repetition, e.g. every 1 ms every X ms, etc. For example, the interfered, or "victim", system may use error correcting codes that may compensate for short time error bursts such that the victim system performance is not affected by such bursts; or, the victim system may be discontinuously connected, e.g. using some TDM scheme.

The adaptation of the out-of-band interference, or "interference leakage", to current activity and conditions in a system using an adjacent frequency band could be achieved in different ways. For example, the antenna patterns of one or more nodes in the disturbing system could be dynamically adapted, e.g. by antenna tilting or other beam redirection/reconfiguration methods. The main or central antenna beam could be redirected such as to avoid creating interference towards e.g. one or more entities of the disturbed system, such as approaching airplanes, trains or UEs, when such vehicles and/or terminals are detected in the area. Changing the antenna pattern e.g. by tilting the antennas will change the power of out-of-band emissions reaching a certain geographic area, which is one possible way to achieve a dynamic interference margin to an interfered system.

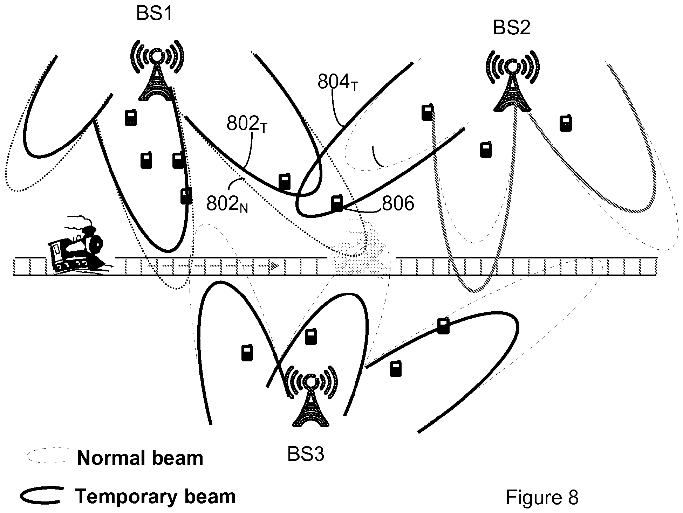

Alternatively or in addition, the transmit power of one or more nodes could be temporarily changed or dynamically adapted, such that an appropriate interference margin is achieved. However, such adaptations should be done in a controlled way, e.g. such that no UEs are suddenly signal-wise "abandoned" outside the signal coverage of the node in question. UEs which are difficult to continue to serve, e.g. when the out-of-band interference should be reduced, may e.g. be handed over to other nodes for continued service (load-sharing). An example of such a load-sharing mechanism is illustrated in figure 8, which will be described further below.

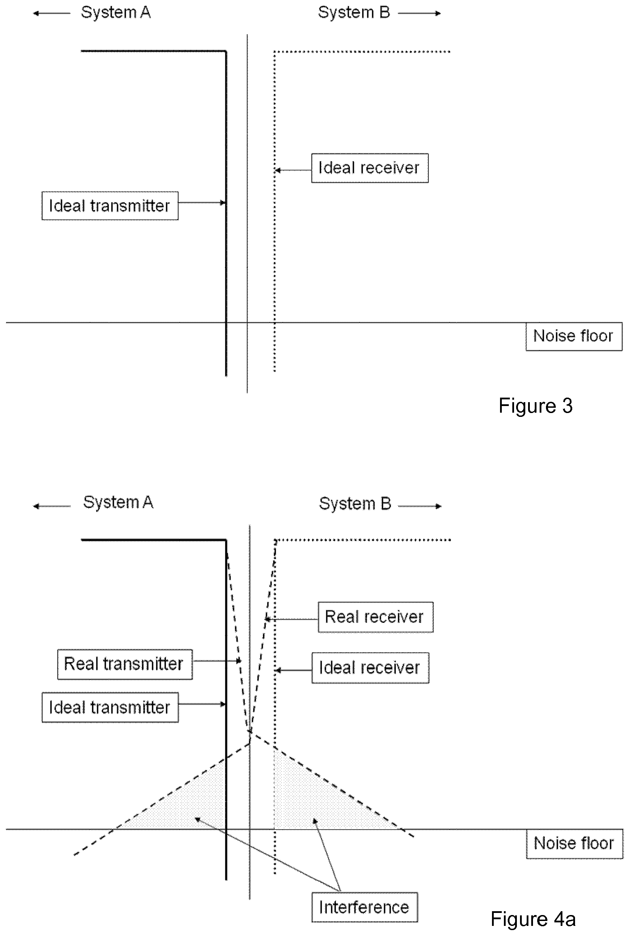

Figures 3-6c illustrate, schematically, the frequency spectrum of an ideal/real transmitter in a system A and the frequency spectrum of an ideal/real receiver in a system B, when applying different methods for interference-reduction in accordance with embodiments of the invention.

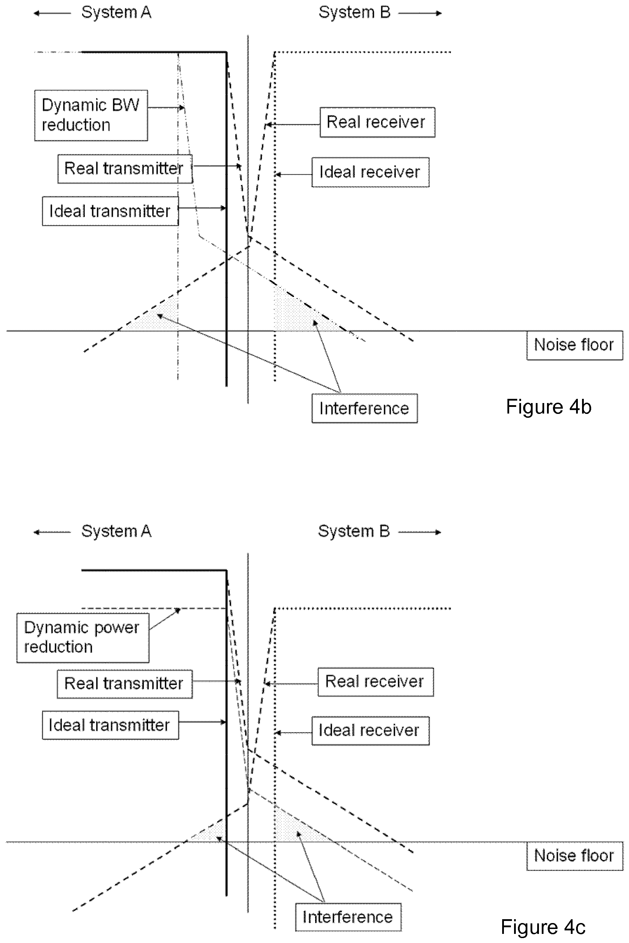

Figure 3 illustrates the frequency spectrum of an ideal transmitter in a system A and an ideal receiver in a system B. In this ideal case illustrated in figure 3, there is no inter-system interference. However, a more realistic situation is illustrated in figure 4a, which also shows the frequency spectrum of a real transmitter and a real receiver. In the situation illustrated in figure 4a, the inter-system interference is relatively large in both systems. Figures 4b and 4c illustrate how the power spectrum of the transmitter of system A, and thus the mutual inter-system interference, changes when applying a dynamic bandwidth reduction (figure 4b) and a dynamic power reduction (figure 4c), respectively. Another alternative would be to combine bandwidth and power reduction (not illustrated). As can be seen when comparing the figures 4a-4c, the shaded areas illustrating the interference is significantly smaller in figures 4b and 4c than in 4a. Further, it appears as if, in this example, a dynamic power reduction is a more efficient alternative than a dynamic bandwidth reduction. However, the choice of interference-reducing measure may also depend on other factors, such as e.g. location of UEs within a cell (e.g. close to cell border or close to BS).

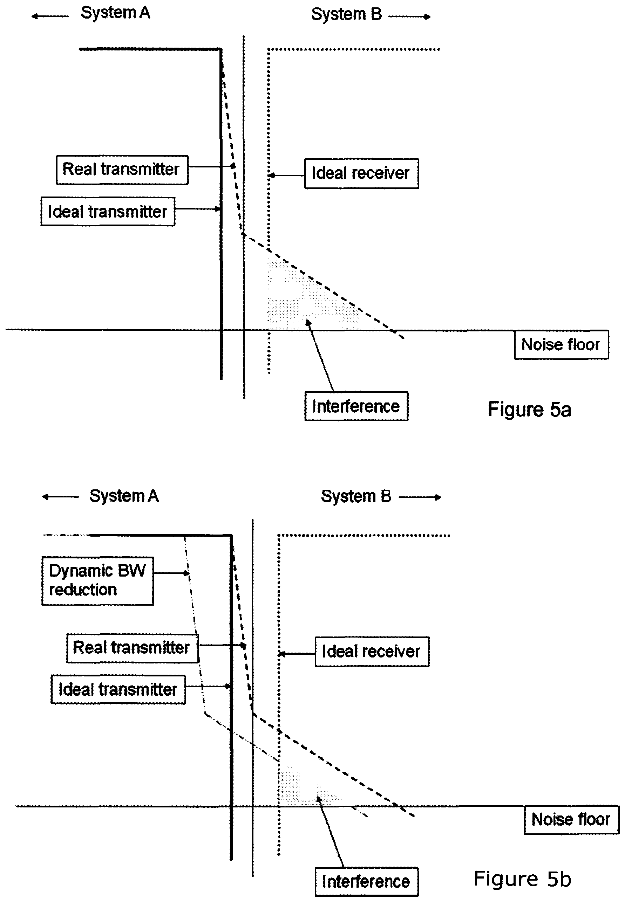

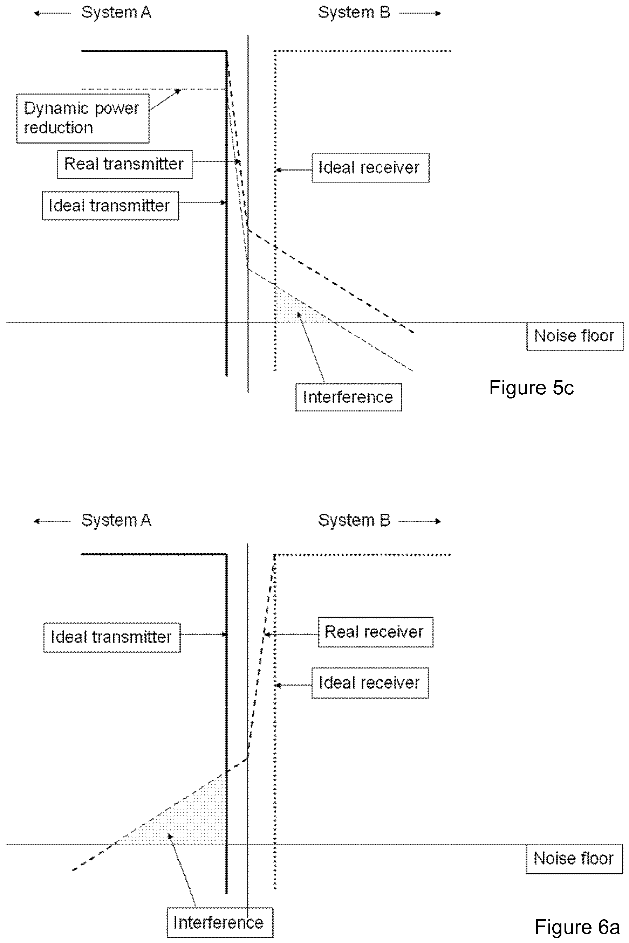

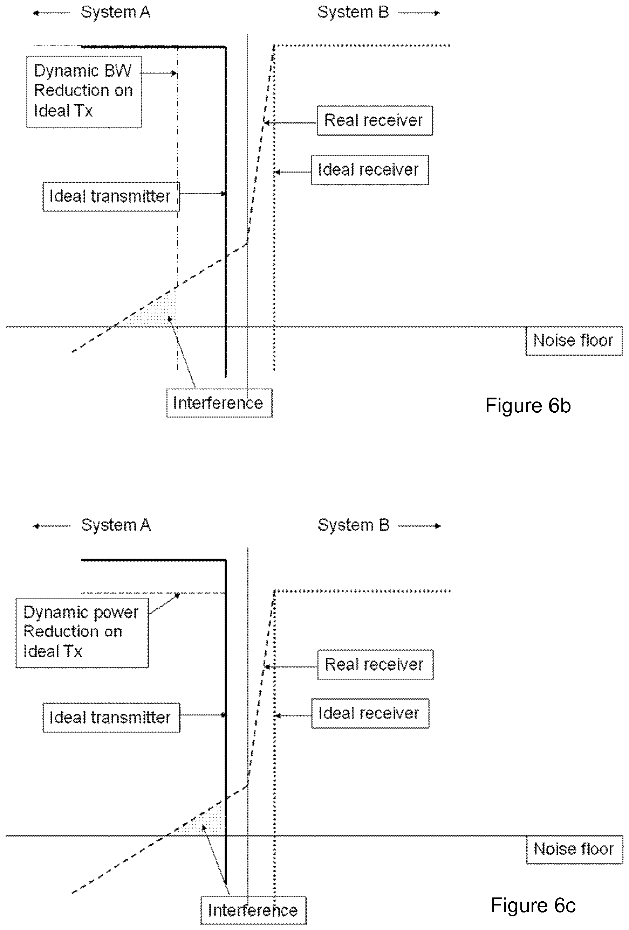

Figures 5a-c illustrate a part of what was illustrated in figures 4a-4c, namely the inter-system interference from system A to system B and the effect of the dynamic bandwidth reduction (5b)/dynamic power reduction (5c) of the system-A-transmitter, on said interference from system A to system B. Figures 6a-6c, on the other hand, illustrate the inter-system interference from system B to system A and the effect of the dynamic bandwidth reduction (6b)/dynamic power reduction (6c) of the system-A-transmitter, on said interference.

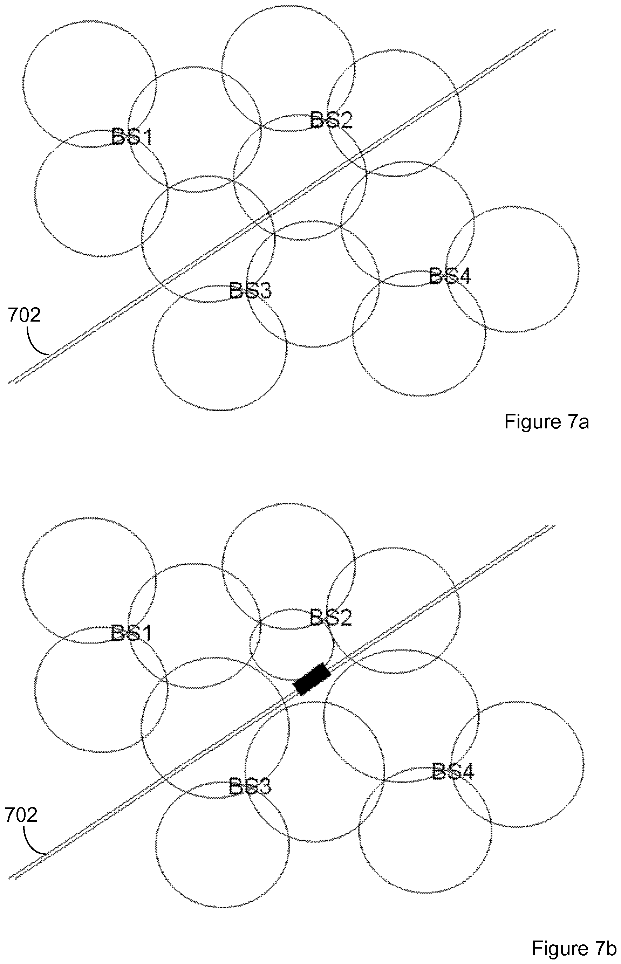

Figures 7a-7b illustrate a number of BSs of a first system, each BS generating a number of cells illustrated as circles, and a train track, 702, where trains pass by, which use a second, frequency-wise adjacent, system for communication. In figure 7a, no train is present, and thus the first system may use its transmission resources to a maximum. In figure 7b, however, a train is present, and the first system is adapted in consideration of the second system, by that one of the cells of BS2 is dynamically reduced.

Figure 8 illustrates three base stations in a communication system normally emitting permanent antenna lobes or beams as illustrated by the dotted lines. As can be seen in figure 8, these permanent beams point in the direction of train rails/tracks. When applying an exemplifying embodiment of the invention, if a train is approaching, the main lobes (beams) of the nearest base station BS1 are adjusted into temporary beams, so as not to create interference to the communication between the train control system and the train. These new adapted temporary beams are illustrated by the bold solid lines in figure 8. When the beams of BS1 are adapted, e.g. by redirection or reconfiguration, the beams of a neighbor base station BS2 may be adjusted, such as to cover areas which are left out of coverage due to the adaptation of the beams of BS1. For example, when beam 802N (dotted line) of BS1 is adapted into beam 802T (solid line) in order to avoid interfering with the train communication system, UE 806 is located outside the coverage of BS1. However, in order to continue to provide UE 806 with service, the beam 804N of BS2 is adapted into beam 804T, and the service of UE 806 is transferred to BS2 (load-sharing). When the train has passed by, the beams of BS1 and BS3 will go back to normal (802N, 804N) Similar adjustments of other beams may take place as the train moves along the track.

The use of adaptive antenna patterns and/or dynamic variation of transmit power can be combined e.g. with actions for adjusting the frequency spectrum, or frequency content, of the out-of-band interference. Moreover, the use of adaptive antenna patterns may improve the possibility of using COMP to improve throughput within LTE; e.g. cells with temporarily reduced bandwidth get more support from neighboring cells for the utilized bandwidth.

Further, adaptive filters may be used to achieve a dynamic response to an arising interference situation. One or more adaptive filters in the disturbing system could be used e.g. to suppress the out-of-band interference in accordance with the characteristics of, and the activity in, a disturbed system. The performance of the disturbing system may be somewhat degraded due to e.g. an increased out-of-band-interference suppression by use of adaptive filters. For example, the signal quality in communication within the disturbing system may be degraded by such suppression. However, when comparing the achievable effects of the available alternatives for reducing interference, adaptive filters may still be the preferable solution in some situations.

Some exemplifying embodiments will be described below. In a first exemplifying embodiment, LTE BSs located within a geographical area close to an airport and/or train rails/tracks are equipped with receivers so as to detect signals from airplanes and/or trains. Upon detection of a signal from an airplane or train, a temporary guard band is applied, which is adjusted dynamically depending on the distance to the airplane/train. The received signal strength is used so as to assess this distance. On the basis of the estimated distance between an LTE BS and an airplane or train, the bandwidth of the temporary guard band is assessed. In case the number of users in the cells with a low radio link quality is below a given number N (implying thus there are few or no users far from the BS), then the LTE BS can reduce its DL transmission power during a given period.

In a second exemplifying embodiment, LTE BSs located within a geographical area in the proximity of an airport or train rails/tracks communicate directly, e.g. either via cable, or via micro-wave links, with the airport control towers or with the traffic controllers of airplanes or trains, such that the LTE BSs can obtain information on the arrival of airplanes and their distance to the LTE BSs. Based on this information, temporary guard bands or temporary power reductions are applied by these base stations.

In a third exemplifying embodiment, LTE BSs implementing e.g. the first and/or second embodiment described above, can apply load balancing techniques so as to steer a part of the cell load to neighbor cells, whose controlling base stations do not interfere with the airplanes or trains, during the time period the temporary guard band is applied.

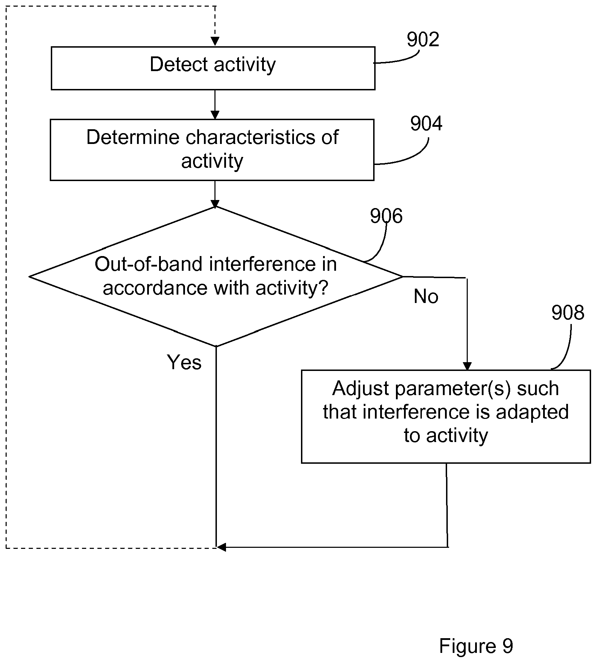

### Exemplifying procedure, figure 9

An exemplifying embodiment of the procedure of avoiding or reducing interference in an adjacent frequency band will now be described with reference to figure 9. The procedure could be performed in network node, such as e.g. a base station, or other node in a first wireless communication system. The first communication system, also denoted the "disturbing system", is assumed to be associated with a first frequency band in which it operates. A second wireless system is assumed to be associated with a second frequency band, which is adjacent to the first frequency band, in which it operates. The first and the second frequency band may be separated by a third frequency band, which is not associated with the first or the second system.

The first communication system may be a system, such as e.g. UMTS (e.g. WCDMA), LTE or LTE-A, operated by a first operator or organization. The second system may be a "dedicated" wireless communication system, such as e.g. the previously mentioned DME, L-DACS or GSM-R, which are used for communication and control of airplanes and trains. The second system may alternatively be a system, such as e.g. UMTS, LTE or LTE-A, operated by a second operator or organization. The second system may further be a radar system comprising e.g. a geographically stationary node generating a rotating/sweeping radar beam; a system for broadcast or a satellite based system. The important factor is that the first and second systems are associated with adjacent frequency bands and that communication within the first system in the frequency band associated with the first system may cause interference in the frequency band associated with the second system, and thereby interfere with the communication within the second system.

Initially, in a network node in the first system, activity of the second system in the second frequency band is detected in an action 902. In order to detect such activity, the network node could e.g. monitor the second frequency band by measuring signal energy in said second frequency band ,or, receive reports related to such measurements performed by some other node(s) in the first system, e.g. UE(s); and/or, receive and decode information communicated by the second system within said second frequency band. Alternatively or in addition, the network node could receive information related to activity in the second frequency band. Such information could be provided e.g. by the second system over an alternative communication link, such as e.g. a microwave link or via wired communication. The information provided by the second system could relate to e.g. one or more of: the geographical position of one or more mobile nodes in the second system; the movement pattern of one or more nodes in the second system, a time schedule of a node in the second system and receiver characteristics of one or more nodes in the second system.

One example of receiver characteristic, or ACS (Adjacent Channel Selectivity), is the blocking capability. For example, a given receiver might be able to handle/reduce/cut interference from a neighbor frequency band (at a distance of e.g. 1.25 MHz) up to 60 dB, whilst another receiver might be less powerful and only be able to cut/remove interference from the same neighbor band at a level of 40 dB. Such information on the interfered (second) system could be made known to the interfering (first) system, such that the interfering system can determine an adequate level of e.g. bandwidth and/or transmission power reduction.

From information obtained e.g. in one or more of the ways described above, the network node is able to detect activity of the second system in the second frequency band. The characteristics of the current activity in the second frequency band is then determined in an action 904, e.g. by analysis of performed measurements or other obtained information.

Thus, when having determined the characteristics of the current activity of the second system in the second frequency band, it may be determined in an optional action 906, if the out-of-band interference caused by communication associated with the network node, i.e. DL from the network node and/or UL to the network node, is in accordance with the characteristics of the current activity of the second system in the second frequency band, or if the out-of-band interference should be reduced or may be increased (within allowed boundaries). By "being in accordance with" is here meant that the out-of-band interference fulfils predefined requirements of to which extent out-of-band interference from the first system may interfere with the second system, while, at the same time, the radio resources in the first system are utilized e.g. to a sufficiently high extent or to an as high extent as possible. That is, the out-of-band interference should not be as high or strong as to interfere with the second system activity, but neither be suppressed to an unnecessarily low level.

Thus, when appropriate, at least one parameter related to radio communication is adjusted in an action 908, such that the interference to the second frequency band from radio communication associated with the network node is adapted to the second system activity in said second frequency band. Examples of parameters which may be adjusted are: the bandwidth in which the network node operates; the antenna pattern of one or more transmit antennas associated with the network node; the transmit power used by the network node; the frequency characteristics of a filter in the network node; the frequencies used for communication by the network node; and instructions to other nodes such as e.g. UEs served by the node.

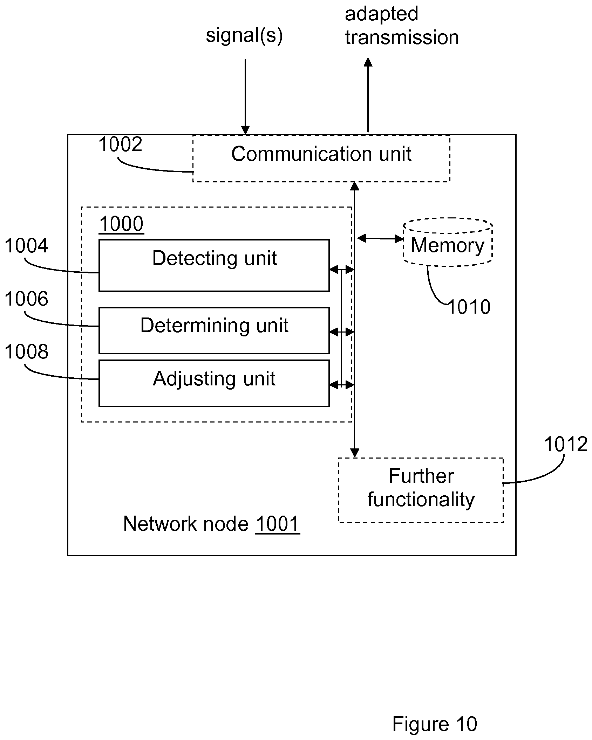

### Exemplifying arrangement, figure 10

Below, an exemplifying arrangement 1000, adapted to enable the performance of the above described procedure of avoiding or reducing interference in an adjacent frequency band will be described with reference to figure 10. The arrangement is suitable for use in, and is illustrated as being located/integrated in, a network node 1001, such as e.g. a base station, or other node in a first communication system being associated with a first frequency band, in which the first system operates. The arrangement 1000 is further illustrated as to communicate with other entities via a communication unit 1002, which may be considered to comprise conventional means for wireless and/or wired communication. The arrangement or receiving node may further comprise other functional units 1012, such as e.g. adaptive filters, antenna control mechanisms and/or functional units providing regular base station functions, such as e.g. serving mobile terminals. The arrangement or receiving node may further comprise one or more storage units 1010. The first and second system may be of various types, as previously described in conjunction with figure 9.

The arrangement 1000 comprises a detecting unit 1004, which is adapted to detect activity of a second system in a second frequency band, which is adjacent to the first frequency band. For example, the detecting unit could be adapted to monitor the second frequency band by measuring signal energy in said second frequency band; by receiving and decoding information communicated by the second system within said second frequency band; Alternatively receive or retrieve information related to the activity in the second frequency band, which information could be received or retrieved e.g. from the second system over an alternative communication link, such as e.g. a microwave link or via wired communication link.

The arrangement further comprises a determining unit 1006, which is adapted to determine the characteristics of the second system current activity in the second frequency band. Said characteristics could relate to one or more of e.g.: which frequencies that are used by the second system for transmission and/or reception, and to which extent; the time period during which the activity is expected to proceed; the expected development of the activity; a periodicity of the activity; and, the geographical extension of the activity. "Expected development" may relate to factors such as e.g. modulation format or modulation concept used by the second system.

The arrangement, e.g. the determining unit 1006 or some additional optional unit, may further be adapted to determine whether the interference to the second frequency band fulfills a predefined requirement, given the characteristics of the second system activity in the second frequency band. The predefined criterion may relate to an acceptable level of interference in the frequencies within the second frequency band, which are affected by the second system activity. The predefined criterion may e.g. be based on regulations regarding allowed levels of out-of-band interference and/or on the result of negotiations between e.g. different operators. Such regulations may be related to "blocking" and/or Adjacent Channel Leakage Ratio (ACLR). For HSPA (High Speed Packet Access) and LTE, for example, information related to such allowed levels may be found in 3GPP specifications.

Thus, the arrangement may be adapted to adjust the at least one parameter such that the interference to the second frequency band is reduced when it is determined that the interference does not fulfill the predefined criterion, and thus potentially interferes with the second system activity; and to adjust the at least one parameter such that the interference to the second frequency band is maintained or increased when it is determined that the interference fulfills the predefined criterion.

The arrangement further comprises an adjusting unit 1008, which is adapted to adjust at least one parameter related to radio communication, in the network node, based on said characteristics, such that the interference to the second frequency band is adapted to the second system activity in said second frequency band. For example, the parameter(s) which is/are adjusted could be parameters such as e.g.: the bandwidth used by the network node for transmission; the frequencies used for communication with mobile terminals served by the network node, when applicable; the settings of one or more antennas associated with the network node, thus controlling the antenna pattern of said antennas; the transmit power used by the network node; instructions to mobile terminals served by the network node, related to e.g. transmit power and frequency usage; filter settings, thus controlling e.g. the frequency characteristics of one or more adaptive filters in the network node.

The functional units described above may be implemented in software and/or hardware, depending on e.g. preference.

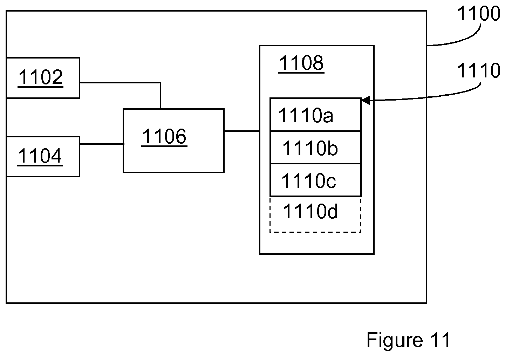

### Exemplifying arrangement, figure 11

Figure 11 schematically shows an embodiment of an arrangement 1100 in a network node, which also can be an alternative way of disclosing an embodiment of the arrangement in a network node illustrated in figure 10. Comprised in the arrangement 1100 are here a processing unit 1106, e.g. with a DSP (Digital Signal Processor). The processing unit 1106 may be a single unit or a plurality of units to perform different actions of procedures described herein. The arrangement 1100 may also comprise an input unit 1102 for receiving signals from other entities, and an output unit 1104 for providing signal(s) to other entities. The input unit 1102 and the output unit 1104 may be arranged as an integrated entity.

Furthermore, the arrangement 1100 comprises at least one computer program product 1108 in the form of a non-volatile memory, e.g. an EEPROM (Electrically Erasable Programmable Read-Only Memory), a flash memory and a hard drive. The computer program product 1108 comprises a computer program 1110, which comprises code means, which when executed in the processing unit 1106 in the arrangement 1100 causes the arrangement and/or the network node to perform the actions of the procedure described earlier in conjunction with figure 9.

The computer program 1110 may be configured as a computer program code structured in computer program modules. Hence, in an exemplifying embodiment, the code means in the computer program 1110 of the arrangement 1100 comprises a detecting module 1110a for detecting activity in an adjacent frequency band. The computer program further comprises a determining module 1110b for determining the characteristics of any detected activity in the adjacent frequency band. The computer program 1110 further comprises an adjusting module 1110c for adjusting one or more parameters, based on the characteristics of the activity, such that interference to the second frequency band, from radio communication associated with the network node, is adapted to the second system activity in said second frequency band. The computer program 1110 could further comprise other modules 1110d for providing other desired functionality.

The modules 1110a-c could essentially perform the actions of the flow illustrated in figure 9, to emulate the arrangement in a receiver node illustrated in figure 10. In other words, when the different modules 1110a-c are executed in the processing unit 1106, they may correspond to the units 404-408 of figure 10.

Although the code means in the embodiment disclosed above in conjunction with figure 11 are implemented as computer program modules which when executed in the processing unit causes the arrangement and/or network node to perform the actions described above in the conjunction with figures mentioned above, at least one of the code means may in alternative embodiments be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product may comprise a computer readable medium on which the computer program is stored. For example, the computer program product may be a flash memory, a RAM (Random-access memory) ROM (Read-Only Memory) or an EEPROM, and the computer program modules described above could in alternative embodiments be distributed on different computer program products in the form of memories within the network node.

Below, some example details on implementation of the suggested solution e.g. in an LTE system will be discussed.

Implementing e.g. temporary modification of the system bandwidth may require some adjustments or additions to e.g. standard specifications. For example, if a system operating within a 20 MHz frequency channel is adjusted to temporarily operate within an 18 MHz frequency channel, the number of available Physical Resource Blocks (PRBs) is reduced. Thus, it should be seen to e.g. that the DL PDCCH can be carried within the remaining amount of PRBs. Organizations such as the 3GPP (3^{rd} Generation Partnership Project) may for example need to specify performance requirements for this new amount of PRBs.

When modifying the operating bandwidth within a cell, this information should be provided to e.g. mobile terminals camping on the cell, at least when appropriate. Said mobile terminals may be notified of the change in operating bandwidth via e.g. the broadcast channel of the cell.

While the procedure as suggested above has been described with reference to specific embodiments provided as examples, the description is generally only intended to illustrate the inventive concept and should not be taken as limiting the scope of the suggested methods and arrangements, which are defined by the appended claims. While described in general terms, the methods and arrangements may be applicable e.g. for different types of communication systems, using commonly available communication technologies using different power and/or bandwidth, such as e.g. WCDMA, LTE, LTE-A, WiMAX (Worldwide Interoperability for Microwave Access), GSM, UMTS, radar systems, satellite systems or broadcast technologies.

It is also to be understood that the choice of interacting units or modules, as well as the naming of the units are only for exemplifying purpose, and client and server nodes suitable to execute any of the methods described above may be configured in a plurality of alternative ways in order to be able to execute the suggested process actions.

It should also be noted that the units or modules described in this disclosure are to be regarded as logical entities and not with necessity as separate physical entities.

## Claims

1. A method in a node (1001) in a first system associated with a first frequency band for radio communication, for avoiding or reducing interference in a second frequency band associated with a second system, the second frequency band adjacent to the first frequency band, the method comprising:
- detecting (902) an activity of the second system in the second frequency band;
- determining (904) characteristics of the activity of the second system in the second frequency band;and
- adjusting (908) at least one parameter related to the radio communication, based on at least one of said characteristics, a number of mobile terminals served by the node (1001), and power requirements of the mobile terminals resulting from services utilized by the mobile terminals, such that the interference to the second frequency band, from the radio communication associated with the node (1001), is adapted to the activity of the second system in said second frequency band,
- wherein the at least one parameter comprises an antenna pattern of one or more transmit antennas associated with the node (1001), wherein the antenna pattern is adjusted by one of: antenna tilting, beam redirection, and reconfiguration methods, and wherein the antenna pattern is temporarily adjusted for a predetermined time period based on an estimated distance between the node (1001) in the first system and one or more mobile nodes in the second system,
- wherein the at least one parameter is adjusted such that the interference to the second frequency band is reduced when it is determined that the interference does not fulfill a predefined criterion and potentially interferes with the activity of the second system; and, such that the interference to the second frequency band is maintained or increased when it is determined that the interference fulfills said predefined criterion.

2. The method according to claim 1, wherein the at least one adjusted parameter further comprises one or more of:
- a bandwidth in which the node (1001) operates,
- a transmit power used by the node (1001),
- frequency characteristics of a filter in the node (1001),
- frequencies used for communication by the node (1001), and
- instructions to one or more of the mobile terminals served by the node (1001), related to:
- the transmit power,
- frequency usage for uplink communication,
- filter settings, and
- the bandwidth.

3. The method according to any of the preceding claims, wherein detecting (902) said activity includes one or more of:
- performing measurements of the activity in the second frequency band, - receiving reports of the measurements of the activity in the second frequency band performed by another node in the first system,
- receiving explicit information of the activity in the second frequency band from a node in the second system,
- receiving information on geographical position of the one or more mobile nodes in the second system,
- receiving information of movement pattern of the one or more mobile nodes in the second system,
- receiving information on a time schedule of the node in the second system, and
- receiving information on receiver characteristics of the one or more mobile nodes in the second system.

4. The method according to any of the preceding claims, wherein the first system is one of:
- Universal Mobile Telecommunications System, UMTS,
- Long Term Evolution, LTE,
- LTE-Advanced, LTE-A, and
- Worldwide Interoperability for Microwave Access, WiMAX.

5. The method according to any of the preceding claims, wherein the second system is one of:
- Distance Measuring Equipment, DME,
- L-band Digital Aeronautical Communication System, L-DACS,
- Global System for Mobile Communications - Railway, GSM-R,
- - a radar system,
- a system for broadcast, and - a satellite based system.

6. An arrangement (1000) for use in a node (1001) in a first system associated with a first frequency band for radio communication, for avoiding or reducing interference in a second frequency band associated with a second system, the second frequency band adjacent to the first frequency band, the arrangement (1000) comprising:
- a detecting unit (1004), adapted to detect an activity of the second system in the second frequency band,
- a determining unit (1006), adapted to determine characteristics of the activity of the second system in the second frequency band, and
- an adjusting unit (1008), adapted to adjust at least one parameter related to the radio communication, based on at least one of said characteristics, a number of mobile terminals served by the node (1001), and power requirements of the mobile terminals resulting from services utilized by the mobile terminals, such that the interference to the second frequency band is adapted to the activity of the second system in said second frequency band,
- wherein the at least one parameter comprises an antenna pattern of one or more transmit antennas associated with the node (1001), wherein the antenna pattern is adjusted by one of: antenna tilting, beam redirection, and reconfiguration methods, and wherein the antenna pattern is temporarily adjusted for a predetermined time period based on an estimated distance between the node (1001) in the first system and one or more mobile nodes in the second system,
- wherein the at least one parameter is adjusted such that the interference to the second frequency band is reduced when it is determined that the interference does not fulfill a predefined criterion and potentially interferes with the activity of the second system; and, such that the interference to the second frequency band is maintained or increased when it is determined that the interference fulfills said predefined criterion.

7. The arrangement (1000) according to claim 6, wherein the arrangement (1000) is adapted to detect the activity of the second system at least by one or more of:
- performing measurements of the activity in the second frequency band,
- receiving reports of the measurements of the activity in the second frequency band performed by another node in the first system,
- receiving explicit information of the activity of the second system in the second frequency band from a node in the second system,
- receiving information on geographical position of the one or more mobile nodes in the second system,
- receiving information of movement pattern of the one or more mobile nodes in the second system,
- receiving information on a time schedule of the node in the second system, and
- receiving information on receiver characteristics of the one or more mobile nodes in the second system.

8. A network node (1001), comprising the arrangement (1000) according to any of claims 6-7.

## Patentansprüche

1. Verfahren in einem Knoten (1001) in einem ersten System, das einem ersten Frequenzband zur Funkkommunikation zugeordnet ist, um eine Interferenz in einem zweiten Frequenzband, das einem zweiten System zugeordnet ist, zu vermeiden oder zu reduzieren, wobei das zweite Frequenzband an das erste Frequenzband angrenzt, wobei das Verfahren umfasst:
- Detektieren (902) einer Aktivität des zweiten Systems in dem zweiten Frequenzband;
- Bestimmen (904) von Kennzeichen der Aktivität des zweiten Systems in dem zweiten Frequenzband; und
- Anpassen (908) mindestens eines Parameters bezüglich der Funkkommunikation basierend auf mindestens einem der Kennzeichen, einer Anzahl von mobilen Endgeräten, die von dem Knoten (1001) bedient werden, und den Leistungsanforderungen der mobilen Endgeräte, die sich aus den Diensten ergeben, die von den mobilen Endgeräten verwendet werden, so dass die Interferenz mit dem zweiten Frequenzband von der Funkkommunikation, die dem Knoten (1001) zugeordnet ist, für die Aktivität des zweiten Systems in dem zweiten Frequenzband geeignet ist,
- wobei der mindestens eine Parameter ein Antennendiagramm von einer oder mehreren Sendeantennen umfasst, die dem Knoten (1001) zugeordnet sind, wobei das Antennendiagramm durch eines angepasst wird von: Neigen der Antenne, Umlenken des Strahls und Neukonfigurierungsverfahren, und wobei das Antennendiagramm für einen vorbestimmten Zeitraum basierend auf einem geschätzten Abstand zwischen dem Knoten (1001) in dem ersten System und einem oder mehreren mobilen Knoten in dem zweiten System zeitweilig angepasst wird,
- wobei der mindestens eine Parameter derart angepasst wird, dass die Interferenz mit dem zweiten Frequenzband reduziert wird, wenn bestimmt wird, dass die Interferenz ein vordefiniertes Kriterium nicht erfüllt und möglicherweise mit der Aktivität des zweiten Systems interferiert; und so dass die Interferenz mit dem zweiten Frequenzband bewahrt oder erhöht wird, wenn bestimmt wird, dass die Interferenz das vordefinierte Kriterium erfüllt.

2. Verfahren nach Anspruch 1, wobei der mindestens eine angepasste Parameter ferner ein oder mehrere Elemente umfasst von:
- einer Bandbreite, in welcher der Knoten (1001) betrieben wird,
- eine Sendeleistung, die von dem Knoten (1001) verwendet wird,
- Frequenzkennzeichen eines Filters in dem Knoten (1001),
- Frequenzen, die von dem Knoten (1001) zur Kommunikation verwendet werden, und
- Anweisungen für eines oder mehrere der mobilen Endgeräte, die von dem Knoten (1001) bedient werden, bezüglich:
- der Sendeleistung,
- der Frequenzverwendung für die Uplink-Kommunikation,
- Filtereinstellungen, und
- der Bandbreite.

3. Verfahren nach einem der vorhergehenden Ansprüche, wobei das Detektieren (902) der Aktivität einen oder mehrere Schritte umfasst von:
- Vornehmen von Messungen der Aktivität in dem zweiten Frequenzband,
- Empfangen von Berichten über die Messungen der Aktivität in dem zweiten Frequenzband, die von einem anderen Knoten in dem ersten System vorgenommen werden,
- Empfangen von expliziten Informationen über die Aktivität in dem zweiten Frequenzband von einem Knoten in dem zweiten System,
- Empfangen von Informationen über die geographische Position des einen oder der mehreren mobilen Knoten in dem zweiten System,
- Empfangen von Informationen über ein Bewegungsmuster des einen oder der mehreren mobilen Knoten in dem zweiten System,
- Empfangen von Informationen über einen Zeitplan des Knotens in dem zweiten System, und
- Empfangen von Informationen über Empfängerkennzeichen des einen oder der mehreren mobilen Knoten in dem zweiten System.

4. Verfahren nach einem der vorhergehenden Ansprüche, wobei das erste System eines ist von:
- Universal Mobile Telecommunications System, UMTS,
- Long Term Evolution, LTE,
- LTE-Advanced, LTE-A, und
- Worldwide Interoperability for Microwave Access, WiMAX.

5. Verfahren nach einem der vorhergehenden Ansprüche, wobei das zweite System eines ist von:
- einem Entfernungsmessgerät, DME,
- einem digitalen aeronautischen L-Band-Kommunikationssystem, L-DACS,
- einem globalen System für mobile Bahnkommunikation, GSM-R,
- einem Radarsystem,
- ein System zum Rundsenden, und
- einem satellitenbasierten System.

6. Anordnung (1000) zur Verwendung in einem Knoten (1001) in einem ersten System, das einem ersten Frequenzband zur Funkkommunikation zugeordnet ist, um eine Interferenz in einem zweiten Frequenzband, das einem zweiten System zugeordnet ist, zu vermeiden oder zu reduzieren, wobei das zweite Frequenzband an das erste Frequenzband angrenzt, wobei die Anordnung (1000) umfasst:
- eine Detektionseinheit (1004), die dazu geeignet ist, eine Aktivität des zweiten Systems in dem zweiten Frequenzband zu detektieren,
- eine Bestimmungseinheit (1006), die dazu geeignet ist, Kennzeichen der Aktivität des zweiten Systems in dem zweiten Frequenzband zu bestimmen, und
- eine Anpassungseinheit (1008), die dazu geeignet ist, mindestens einen Parameter bezüglich der Funkkommunikation basierend auf mindestens einem der Kennzeichen, einer Anzahl von mobilen Endgeräten, die von dem Knoten (1001) bedient werden, und den Leistungsanforderungen der mobilen Endgeräte, die sich aus Diensten ergeben, die von den mobilen Endgeräten verwendet werden, anzupassen, so dass die Interferenz mit dem zweiten Frequenzband für die Aktivität des zweiten Systems in dem zweiten Frequenzband geeignet ist,
- wobei der mindestens eine Parameter ein Antennendiagramm von einer oder mehreren Sendeantennen umfasst, die dem Knoten (1001) zugeordnet sind, wobei das Antennendiagramm durch eines angepasst wird von: Neigen der Antenne, Umlenken des Strahls und Neukonfigurierungsverfahren, und wobei das Antennendiagramm für einen vorbestimmten Zeitraum basierend auf einem geschätzten Abstand zwischen dem Knoten (1001) in dem ersten System und einem oder mehreren mobilen Knoten in dem zweiten System zeitweilig angepasst wird,
- wobei der mindestens eine Parameter derart angepasst wird, dass die Interferenz mit dem zweiten Frequenzband reduziert wird, wenn bestimmt wird, dass die Interferenz ein vordefiniertes Kriterium nicht erfüllt und möglicherweise mit der Aktivität des zweiten Systems interferiert; und so dass die Interferenz mit dem zweiten Frequenzband bewahrt oder erhöht wird, wenn bestimmt wird, dass die Interferenz das vordefinierte Kriterium erfüllt.

7. Anordnung (1000) nach Anspruch 6, wobei die Anordnung (1000) dazu geeignet ist, die Aktivität des zweiten Systems mindestens durch einen oder mehrere Schritte zu detektieren von:
- Vornehmen von Messungen der Aktivität in dem zweiten Frequenzband,
- Empfangen von Berichten über die Messungen der Aktivität in dem zweiten Frequenzband, die von einem anderen Knoten in dem ersten System vorgenommen werden,
- Empfangen von expliziten Informationen über die Aktivität des zweiten Systems in dem zweiten Frequenzband von einem Knoten in dem zweiten System,
- Empfangen von Informationen über die geographische Position des einen oder der mehreren mobilen Knoten in dem zweiten System,
- Empfangen von Informationen über ein Bewegungsmuster des einen oder der mehreren mobilen Knoten in dem zweiten System,
- Empfangen von Informationen über einen Zeitplan des Knotens in dem zweiten System, und
- Empfangen von Informationen über Empfängerkennzeichen des einen oder der mehreren mobilen Knoten in dem zweiten System.

8. Netzwerkknoten (1001), umfassend die Anordnung (1000) nach einem der Ansprüche 6 bis 7.

## Revendications

1. Procédé dans un noeud (1001) dans un premier système associé à une première bande de fréquence pour communication radio, pour éviter ou réduire les interférences dans une seconde bande de fréquence associée à un second système, la seconde bande de fréquence étant adjacente à la première bande de fréquence, le procédé comprenant :
- la détection (902) d'une activité du second système dans la seconde bande de fréquence ;
- la détermination (904) de caractéristiques de l'activité du second système dans la seconde bande de fréquence ; et
- le réglage (908) d'au moins un paramètre lié à la communication radio, sur la base d'au moins une desdites caractéristiques, d'un nombre de terminaux mobiles desservis par le noeud (1001), et des besoins en puissance des terminaux mobiles résultant des services utilisés par les terminaux mobiles, de sorte que les interférences avec la seconde bande de fréquence, en provenance de la communication radio associée au noeud (1001), sont adaptées à l'activité du second système dans ladite seconde bande de fréquence,
- dans lequel l'au moins un paramètre comprend un diagramme d'antenne d'une ou plusieurs antennes d'émission associées au noeud (1001), dans lequel le diagramme d'antenne est réglé par un procédé parmi : une inclinaison d'antenne, une redirection de faisceau et des procédés de reconfiguration, et dans lequel le diagramme d'antenne est temporairement réglé pendant une période prédéterminée sur la base d'une distance estimée entre le noeud (1001) dans le premier système et un ou plusieurs noeuds mobiles dans le second système,
- dans lequel l'au moins un paramètre est réglé de sorte que les interférences avec la seconde bande de fréquence sont réduites lorsqu'il est déterminé que les interférences ne remplissent pas un critère prédéfini et interfèrent potentiellement avec l'activité du second système ; et, de sorte que les interférences avec la seconde bande de fréquence sont maintenues ou augmentées lorsqu'il est déterminé que les interférences remplissent ledit critère prédéfini.

2. Procédé selon la revendication 1, dans lequel l'au moins un paramètre réglé comprend en outre un ou plusieurs parmi :
- une bande passante dans laquelle le noeud (1001) fonctionne,
- une puissance d'émission utilisée par le noeud (1001),
- des caractéristiques de fréquence d'un filtre dans le noeud (1001),
- les fréquences utilisées pour la communication par le noeud (1001), et
- des instructions à un ou plusieurs des terminaux mobiles desservis par le noeud (1001), relatives à :
- la puissance d'émission,
- l'utilisation des fréquences pour la communication en liaison montante,
- les paramètres de filtrage, et
- la bande passante.

3. Procédé selon l'une quelconque des revendications précédentes, dans lequel la détection (902) de ladite activité comporte un ou plusieurs parmi :
- la réalisation de mesures de l'activité dans la seconde bande de fréquence,
- la réception de rapports des mesures de l'activité dans la seconde bande de fréquence réalisées par un autre noeud du premier système,
- la réception d'informations explicites sur l'activité dans la seconde bande de fréquence à partir d'un noeud dans le second système,
- la réception d'informations sur la position géographique des un ou plusieurs noeuds mobiles dans le second système,
- la réception d'informations sur le modèle de mouvement des un ou plusieurs noeuds mobiles dans le second système,
la réception d'informations sur un calendrier du noeud dans le second système, et
- la réception d'informations sur les caractéristiques de récepteur des un ou plusieurs noeuds mobiles dans le second système.

4. Procédé selon l'une quelconque des revendications précédentes, dans lequel le premier système est un système parmi les suivants :
- Système universel de télécommunications mobiles, UMTS ;
- Noeud de relais d'évolution à long terme, LTE,
- LTE avancé, LTE-A, et
- Interopérabilité mondiale pour l'accès aux microondes, WiMAX.

5. Procédé selon l'une quelconque des revendications précédentes, dans lequel le second système est un système parmi les suivants :
- Équipement de mesure de distance, DME,
- Système de communication aéronautique numérique en bande L, L-DACS,
- Système mondial de communications mobiles - ferroviaire, GSM-R,
- un système radar,
- un système de diffusion, et
- un système par satellite.

6. Dispositif (1000) destiné à être utilisé dans un noeud (1001) dans un premier système associé à une première bande de fréquence pour communication radio, pour éviter ou réduire les interférences dans une seconde bande de fréquence associée à un second système, la seconde bande de fréquence étant adjacente à la première bande de fréquence, le dispositif (1000) comprenant :
- une unité de détection (1004) adaptée pour détecter une activité du second système dans la seconde bande de fréquence,
- une unité de détermination (1006) adaptée pour déterminer les caractéristiques de l'activité du second système dans la seconde bande de fréquence, et
- une unité de réglage (1008) adaptée pour régler au moins un paramètre lié à la communication radio, sur la base d'au moins une desdites caractéristiques, un nombre de terminaux mobiles desservis par le noeud (1001), et les besoins en puissance des terminaux mobiles résultant des services utilisés par les terminaux mobiles, de sorte que les interférences avec la seconde bande de fréquence sont adaptées à l'activité du second système dans ladite seconde bande de fréquence,
- dans lequel l'au moins un paramètre comprend un diagramme d'antenne d'une ou plusieurs antennes d'émission associées au noeud (1001), dans lequel le diagramme d'antenne est réglé par un procédé parmi : une inclinaison d'antenne, une redirection de faisceau et des procédés de reconfiguration, et dans lequel le diagramme d'antenne est temporairement réglé pendant une période prédéterminée sur la base d'une distance estimée entre le noeud (1001) dans le premier système et un ou plusieurs noeuds mobiles dans le second système,
- dans lequel l'au moins un paramètre est réglé de sorte que les interférences avec la seconde bande de fréquence sont réduites lorsqu'il est déterminé que les interférences ne remplissent pas un critère prédéfini et interfèrent potentiellement avec l'activité du second système ; et, de sorte que les interférences avec la seconde bande de fréquence sont maintenues ou augmentées lorsqu'il est déterminé que les interférences remplissent ledit critère prédéfini.

7. Dispositif (1000) selon la revendication 6, dans lequel le dispositif (1000) est adapté pour détecter l'activité du second système au moins par un ou plusieurs parmi :
- la réalisation de mesures de l'activité dans la seconde bande de fréquence,
- la réception de rapports des mesures de l'activité dans la seconde bande de fréquence réalisées par un autre noeud du premier système,
- la réception d'informations explicites sur l'activité du second système dans la seconde bande de fréquence à partir d'un noeud dans le second système,
- la réception d'informations sur la position géographique des un ou plusieurs noeuds mobiles dans le second système,
- la réception d'informations sur le modèle de mouvement des un ou plusieurs noeuds mobiles dans le second système,
- la réception d'informations sur un calendrier du noeud dans le second système, et
- la réception d'informations sur les caractéristiques de récepteur des un ou plusieurs noeuds mobiles dans le second système,

8. Noeud de réseau (1001), comprenant le dispositif (1000) selon l'une quelconque des revendications 6 et 7.
